(19) **Europäisches Patentamt**

**European Patent Office**

**Office européen des brevets**

(11) **EP 1 048 853 A1**

(12) **EUROPEAN PATENT APPLICATION**
published in accordance with Art. 158(3) EPC

(43) Date of publication:
02.11.2000 Bulletin 2000/44

(51) Int. Cl.$^7$: **F15B 11/16**

(21) Application number: **99972293.7**

(86) International application number:
**PCT/JP99/06250**

(22) Date of filing: **10.11.1999**

(87) International publication number:
**WO 00/29752 (25.05.2000 Gazette 2000/21)**

(84) Designated Contracting States:
**AT BE CH CY DE DK ES FI FR GB GR IE IT LI LU MC NL PT SE**

(30) Priority: **12.11.1998 JP 32235098**

(71) Applicant:
**Shin Caterpillar Mitsubishi Ltd.
Tokyo 158-8530 (JP)**

(72) Inventors:
 • MORIYA, Naoyuki,
  Shin Caterpillar Mitsubishi Ltd.
  Tokyo 158-8530 (JP)
 • FURUTA, Hideto,
  Shin Caterpillar Mitsubishi Ltd.
  Tokyo 158-8530 (JP)

(74) Representative: **Hud, Robert
Cabinet COLLIGNON
15 rue de Surène
75008 Paris (FR)**

(54) **HYDRAULIC CONTROL DEVICE FOR WORKING MACHINES**

(57) A hydraulic control device for working machines which improves compound operability for working machines such as hydraulic shovels having a plurality of hydraulic actuators, wherein, in the control section, distributive flow quantities $\gamma_1$ $\gamma_6$ for distributing an allowable flow quantity $\beta$ for a hydraulic pump arc calculated on the basis of the manipulated variable for an operating tool and a control instruction is issued to an electromagnetic proportional pressure reducing valve to feed the distributive flow quantities to the hydraulic actuators.

Fig. 6

**Description**

FIELD OF THE INVENTION

The present invention relates to a hydraulic control device for a work machine such as a hydraulic shovel, etc.

BACKGROUND OF THE INVENTION

Generally, some work machines such as a hydraulic shovel, etc., comprise a plurality of hydraulic actuators, a hydraulic pump to feed pressurized oil to these hydraulic actuators, control valves operating so as to control feeding of the pressurized oil to the respective hydraulic pumps, and a control unit to output control commands to an actuating means of the control valves by inputting operation signals of operating tools. As a hydraulic control system for such a work machine, there is a closed center system in which oil is not bled when the control valve is at the neutral position. And, conventionally, in such a dosed center system, the degree of openness (spool positions) of the respective control valves was constructed so that the degree is controlled in response to the degree of operation of an operation tool corresponding thereto regardless of the operating states of the other operation tools.

However, where a plurality of operation tools are operated in combination, there are cases where the sum of flow quantity requested by the respective hydraulic actuators required by operating the corresponding operation tools exceeds the flow quantity which the hydraulic pump can feed. In these cases, the flow quantity of pressurized oil supplied into the hydraulic actuators, passing through the respective control valves, becomes less than the requested volume. However, since the degree of openness of the respective control valves is controlled in response to the operating degree of the operation tools corresponding thereto as described above, the operating degree may be increased more than the feeding volume of the hydraulic pump. In such a case, the hydraulic actuators may become vacuous, resulting in inadequate movement. For example, smooth actuation is hindered when a front attachment attached to a work machine is interlocked therewith and actuated, and a problem occurs in that the operation efficiency may be worsened. This is an object to be solved by the invention.

DISCLOSURE OF THE INVENTION

The present invention was developed to solve the above problem in view of the above-mentioned situations. A hydraulic control device for a work machine according to the invention is constructed so that, in a work machine comprising a plurality of hydraulic actuators, a hydraulic pump for feeding pressurized oil to these hydraulic actuators, control valves for controlling feeding of pressurized oil to the respective hydraulic actuators, and a valve operating means for operating the respective control valves; a control unit is provided, which inputs signals coming from an operation status detecting means for detecting the operation status of operating tools for the respective hydraulic actuators, and outputs control commands to the valve operating means corresponding thereto on the basis of the corresponding input signals, wherein the corresponding control unit calculates the flaw quantity for sharing the output flow quantity of the hydraulic pump to the respective hydraulic actuators on the basis of input signals from the operation status detecting means, and outputs control commands to the valve operating means in order to feed the corresponding shared flow quantity to the respective hydraulic actuators.

And, with such a construction, the control valves operate so as to supply the shared flow quantity to the respective hydraulic actuators, wherein when operating a plurality of hydraulic actuators in combination, the output volume of the hydraulic pump can be adequately shared to the respective hydraulic actuators, and at the same time, it is possible to prevent the degree of openness of the control valve from becoming greater than the supply volume from the hydraulic pump, whereby its composite operation efficiency can be improved.

In this type, it is possible to calculate the output flow quantity of the hydraulic pump on the basis of the maximum torque, number of times of revolutions, and discharge pressure of thetipump at the moment.

Also, in a case where the sum of the requested flow quantity of the respective hydraulic actuators required on the basis of the operating status of an operating tool is smaller than the output flow quantity of the hydraulic pump, it is possible to prevent the shared flow quantity from becoming greater than the requested flow quantity by setting the requested flow quantity of the respective hydraulic actuators to the shared flow quantity.

BRIEF DESCRIPTION OF THE DRAWINGS

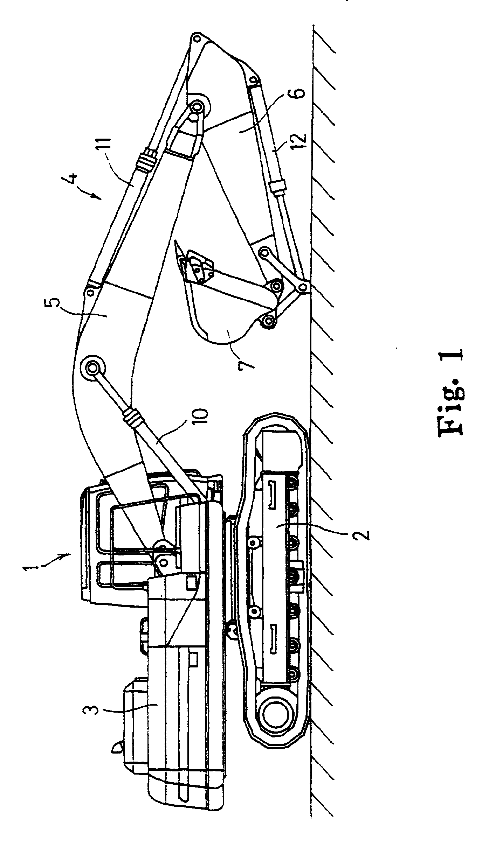

FIG. 1 is a side elevational view of a hydraulic shovel;
FIG. 2 is a sketch of hydraulic circuits showing feeding of pressurized oil to hydraulic actuators;

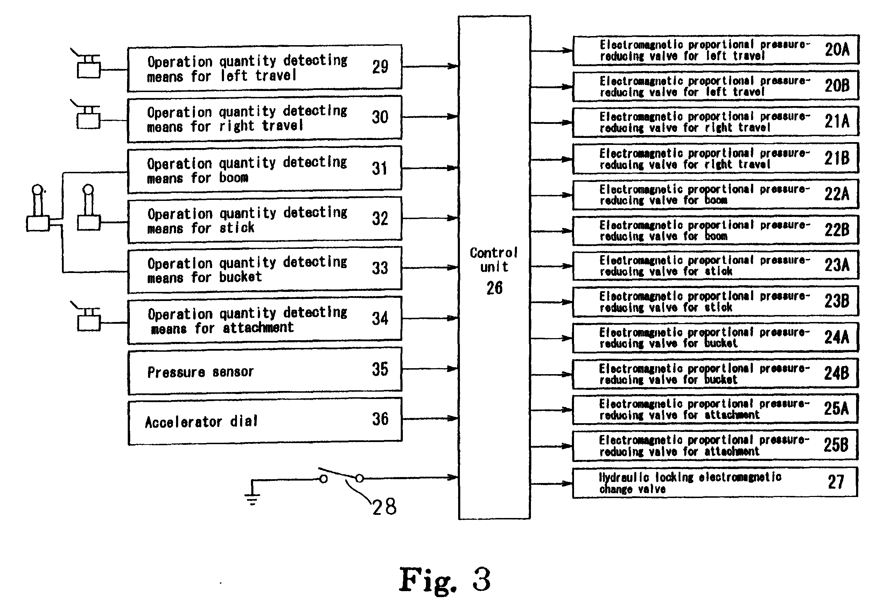

FIG. 3 is a block diagram showing input and output of the control unit;

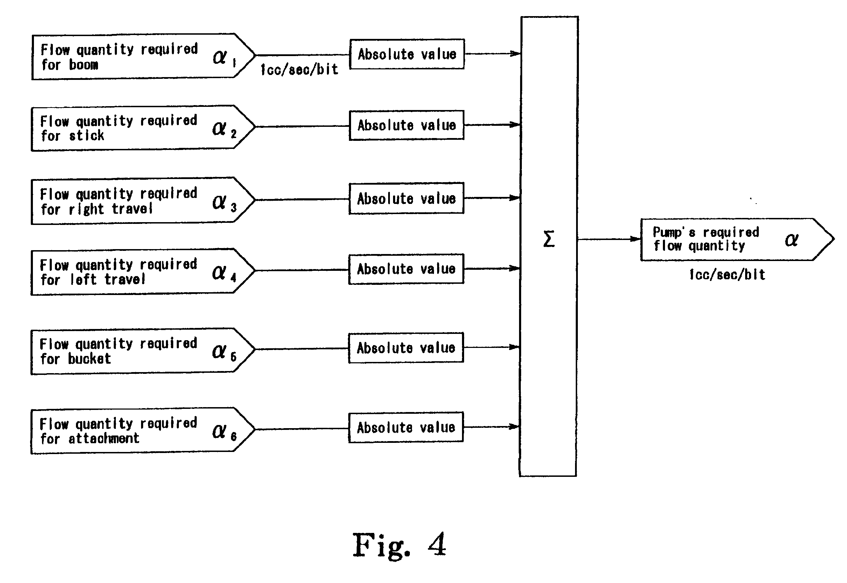

FIG. 4 is a control block diagram showing a calculation procedure of the flow quantity requested with respect to the pump;
FIG. 5 is a control block diagram showing a calculation of the permissible flow quantity of the pump; and

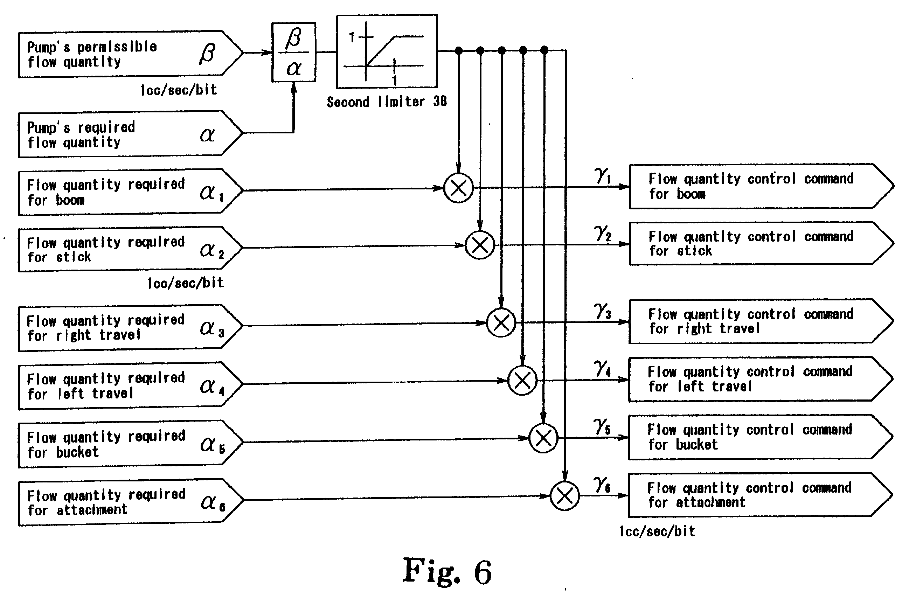

FIG. 6 is a control block diagram showing a calculation procedure of a shared flow quantity.

BEST MODE FOR CARRYING OUT THE INVENTION

Next, a description is given of an embodiment of the invention with reference to the accompanying drawings. In the drawings, 1 indicates a hydraulic shovel. The hydraulic shove 1 is composed of a crawler type lower structure 2, an upper structure 3 supported so as to freely swivel on the lower structure 2, and respective portions such as a front attachment 4, which are attached to the upper structure 3, wherein the basic construction of the front attachment 4 is as in prior arts, which is composed of a boom whose base end portion can freely rock on the upper structure 3, a stick 6 supported on the tip end portion of the boom 5 so as to freely rock, a bucket 7 supported at the tip end of the stick 7 so as to freely rock, etc.,

Further, the hydraulic shovel 1 is provided with various types of hydraulic actuators such as motors 8,9 for left and right travel, a boom cylinder 10 to rock the boom, a stick cylinder 11 to rock the stick, a bucket cylinder 12 to rock the bucket, and an attachment cylinder 13 to actuate an attachment (not illustrated), etc. Actuation of these hydraulic actuators is carried cut on the basis of supply of pressurized oil from a hydraulic pump P driven by the power of an engine.

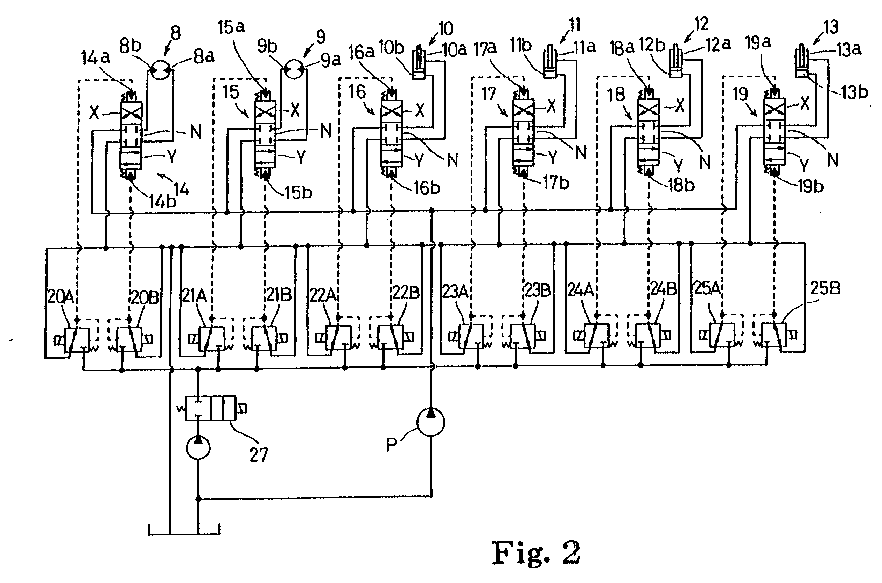

FIG. 2 shows a sketch of a pressurized oil feeding circuit to the hydraulic actuators 8 through 13. In the drawing, 14 through 19 are control valves for left travel, right travel, boom, stick, bucket and attachment, each of which controls supply of pressurized oil to the respective hydraulic actuators. These control valves 14 through 18 are, respectively, composed of a pilot-operated type three-position change valve.

Although the control valves 14 through 19 are located at the neutral position N at which no pressurized oil is fed to the hydraulic actuators 13 through 18 in a state where pilot pressurized oil is not supplied to pilot ports 14a through 19a or 14b through 19b, a spool moves by pilot pressurized oil being supplied to the pilot ports 14a through 19a or 14b through 19b, whereby the control valves 14 through 19 are changed to a pressurized oil feeding position X or Y where a valve path for supplying pressurized oil from the hydraulic pump P to one oil chamber 8a, 9a, 10a, 11a, 12a, or 13a of the corresponding hydraulic actuators 8 through 13 is opened, and another valve path for returning discharged oil from the other oil chamber 8b, 9b, 10b, 11b, 12b or 13b of the hydraulic actuators 8 through 13 to an oil tank T is opened. And, the degree of openness (spool position) of the valve paths of the above-mentioned control valves 14 through 19 is controlled by pilot pressure provided by the pilot ports 14a through 19a or 14b through 19b.

In addition, electromagnetic proportional pressure valves 20A through 25A, and 20B through 25B for left travel, right travel, boom, stick, bucket and attachment output pilot pressurized oil to the pilot ports 14a through 19a, and 14b through 19b of the control valves 14 through 19. The output pressure of the electromagnetic proportional pressure-reducing valves 20A through 25A and 20B through 25B is controlled on the basis of commands provided by a control unit 26 described later.

Also, in FIG. 2, 27 is an electromagnetic change valve for hydraulic locking, and the electromagnetic change valve 27 closes the oil path for feeding pilot pressurized oil to the electromagnetic proportional pressure-reducing valves 20A through 25A and 20B through 25B in a state where a lock stick 28 is opened, whereby operation of the hydraulic actuators 8 through 13 is locked. However, the oil path for feeding pilot pressurized oil is opened in a state where the lock stick 28 is closed, whereby the operation of the hydraulic actuators 8 through 13 is enabled.

Further, 29 through 34 are operation quantity detecting means which, respectively, detect the operation quantities of the respective operating levers and operation pedals for left travel, right travel, boom, stick, bucket and attachment, which are composed of angle sensors, etc. Detection signals outputted from the operation quantity detecting means 29 through 34 are inputted into the control unit 26.

The control unit 26 is constructed of a microcomputer, etc., and is constructed so as to input signals from the operation quantity detecting means 29 through 34, a pressure sensor 35 for detecting the discharge pressure of the hydraulic pump P, accelerator dial 36, and lock switch 28, etc., and output control commands to the electromagnetic proportional pressure-reducing valves 20A through 25A, 20B through 25B, and hydraulic locking electromagnetic change valve 27 on the basis of the corresponding input signals.
Herein, the accelerator dial 36 is an operation dial to set the number of times of revolutions of an engine, wherein the number of times of revolutions can be set to ten stages [1] through [10], for example, where the accelerator dial 36 is set to [1], the number of times of revolutions is set to 850 rpm, is set to [5], the number of times of revolutions becomes 1,450 rpm, and is set to [10], the number of engine revolution becomes 2,200 rpm.

Next, a description is given of a controlling procedure in the above-mentioned control unit 26. First, an operation speed requested to respective hydraulic actuators 8 through 13 corresponding thereto is calculated on the basis of the operation quantity of an operating tool, which is inputted from the above operation quantity detecting means 29 through 34, required flow quantities $á_1$ through $a_6$ necessary to obtain the corresponding operation speed are obtained. Next, the total sum of the absolute values of the required flow quantities $á_1$ through $a_6$ of the respective hydraulic actuators 8 through 13 are calculated, and the total sum is used as a pump required flow quantity a.

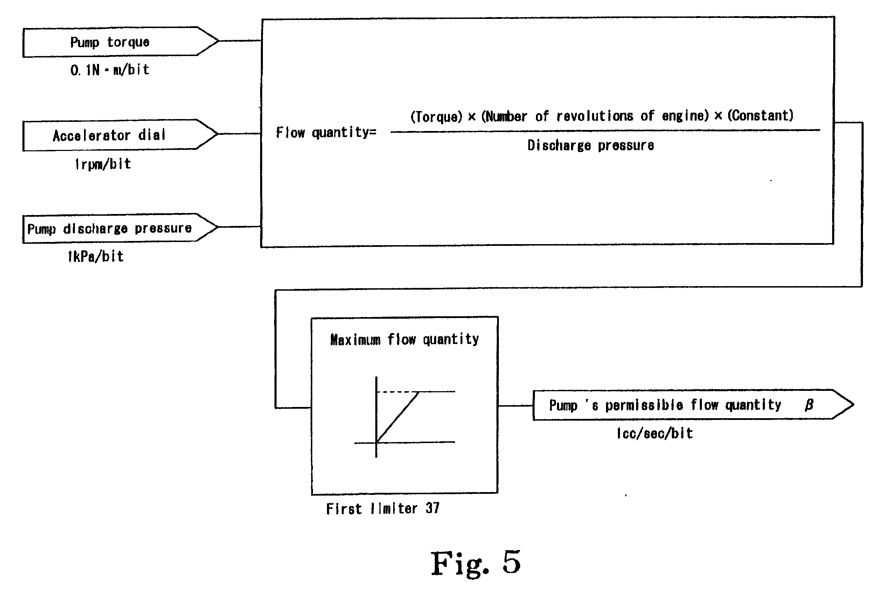

On the other hand, using the maximum torque which the hydraulic pump P can output at the current time, discharge pressure of the hydraulic pump P detected by the above-mentioned pressure sensor 35, and the number of times of revolutions established by the accelerator dial 36, the permissible flow quantity $\beta$ (the maximum flow quantity which the hydraulic pump P can output) of the hydraulic pump P at this moment is calculated. In this case, as shown in the flow quantity flow expression of FIG. 5, as the discharge pressure of the hydraulic pump P is decreased, the pump flow quantity is accordingly increased. However, the first limiter 37 is provided for preparation when the discharge pressure became extraordinarily lower, and it is controlled that the permissible flow quantity $\beta$ of the pump does not become greater than the maximum flow quantity that the hydraulic pump P can output.

Next, a ratio ($\beta/a$) of the permissible flow quantity $\hat{a}$ with the required capacity a of the above-mentioned pump is obtained, and the ratio is multiplied by the required flow quantities $a_1$ through $a_6$ of the respective hydraulic actuators 8 through 13 in order to obtain the shared flow quantities $\gamma_1$ through $\gamma_6$ ($\gamma_1$ through $\gamma_6 = \alpha_1$ through $\alpha_6$ x $\beta/\alpha$) which is shared to the respective hydraulic actuators 8 through 13. In this case, where the permissible flow quantity $\beta$ of the pump is greater than the required flow quantity $\alpha$, the above-mentioned ratio ($\beta/\alpha$) becomes greater than [1], where such a problem occurs in that the flow quantifies $\gamma_1$ through $\gamma_6$ to the respective hydraulic actuators 8 through 13 become greater than the required flow quantities $\alpha_1$ through $\alpha_6$. In order to prevent this problem, where the above-mentioned ratio ($\beta/\alpha$) is greater than [1] (that is, $\{(\beta/\alpha)\geq 1$ }, the second limiter 38 is provided to limit the ratio to [1], whereby the required flow quantities $\alpha_1$ through $\alpha_6$ of the respective hydraulic actuators 8 through 13 are set so as to become the shared flow quantities $\gamma_1$ through $\gamma_6$ where the permissible flow quantity $\beta$ of the pump is greater than the required flow quantity $\alpha$ of the pump.

And, the control unit 26 outputs control commands to the electromagnetic proportional pressure-reducing valves 20A through 25A, and 20B through 25B in order to control the degree of openness of the control valves 14 through 19 so that the flow quantities of pressurized oil supplied to the respective hydraulic actuators 8 through 13 become the above-mentioned shared flow quantities $\gamma_1$ through $\gamma_6$. Thereby, the degree of openness of the control valves 14 through 19 corresponds to the shared flow quantities $\gamma_1$ through $\gamma_6$ in which the output flow quantity of the hydraulic pump P is shared to the respective hydraulic actuators 8 through 13, and the corresponding shared flow quantities $\gamma_1$ through $\gamma_6$ are supplied to the respective hydraulic actuators 8 through 13.

In the hydraulic control device thus constructed, the operation of the respective hydraulic actuators 8 through 13 is carried out by feeding of pressurized oil from the hydraulic pump P on the basis of the operation of an operating tool. In this case, the degree of openness of the control valves 14 through 19 which control the feeding of pressurized oil for the hydraulic actuators 8 through 13 is controlled so that the quantity of oil flow supplied to the hydraulic actuators 8 through 13 becomes the shared flow quantities $\gamma_1$ through $\gamma_6$ which are obtained by sharing the output flow quantity of the hydraulic pump P corresponding to the quantity of operation of the operating tool.

As a result, when operating a plurality of operating tools where front attachments 4 are operated in an interlocked state, in a case where the total sum of the required flow quantities of the hydraulic actuators 8 through 13, which are requested by the respective operating tools, is greater than the output flow quantity of the hydraulic pump P, the degree of openness of the control valves 14 through 19 will correspond to the flow quantities $\gamma_1$ through $\gamma_6$ which are obtained by sharing the output flow quantity of the hydraulic pump P on the basis of the quantity of operation of the respective operating tools, wherein since the corresponding shared flow quantities $\gamma_1$ through $\gamma_6$ are supplied to the respective hydraulic actuators 8 through 13, the output flow quantity of the hydraulic pump P can be adequately shared to the respective hydraulic actuators 8 through 13. Furthermore, in this case, since the degree of openness of the control valves 14 through 19 corresponds to the shred flow quantities $\gamma_1$ through $\gamma_6$, there is no case where the degree of openness of the control valves 14 through 19 becomes greater than the feeding flow quantity as in the prior arts. Therefore, the front attachments 4 can be smoothly actuated, and it can contribute to improvement of the operation efficiency.

INDUSTRIAL APPLICABILITY

In summary, as constructed in Claim 1, the control valves which, respectively, carry out the feeding control of pressurized oil into the respective hydraulic actuators, operate so that the shared flow quantities calculated on the basis of the output flow quantity of the hydraulic pump can be supplied to the corresponding hydraulic actuators, whereby it is possible to adequately feed and share the flow quantity of pressurized oil from the hydraulic pump to a plurality of hydraulic actuators, and it is possible to prevent the degree of openness of the control valves from becoming greater than the feeding flow quantity from the hydraulic pump. Therefore, the composite operation efficiency can be further improved, and there is an advantageous applicability to the industries in view of this point.

Further to the construction described in Claim 2 with respect to the invention as set forth in Claim 1, since it is possible to obtain the output flow quantity of the hydraulic pump, there is an advatageous applicability to the industries in view of this point.

Still further to the construction described in Claim 3 with respect to the invention as set forth in these inventions, it is possible to prevent a trouble or a problem, by which the shared flow quantities become greater than the flow quantity required by operating tools, from occurring. There is an advantageous applicability to the industries in view of this point.

**Claims**

1. A hydraulic control device for a work machine comprising a plurality of hydraulic actuators; a hydraulic pump for feeding pressurized oil to these hydraulic actuators; control valves for controlling feeding of pressurized oil to the respective hydraulic actuators; and a valve operating men for operating the respective control valves; wherein a control unit is provided, which inputs signals coming from an operation status detecting means for detecting the operation status of operating tools for the respective hydraulic actuators, and outputs control commands to the valve operating means corresponding thereto on the basis of the corresponding input signals, and wherein said control unit calculates the flow quantity for sharing the output flow quantity of said hydraulic pump to the respective hydraulic actuators on the basis of input signals from said operation status detecting means, and outputs control commands to said valve operating means in order to feed said shared flow quantities to the respective hydraulic actuators.

2. A hydraulic controlling device for a work machine as set forth in Claim 1, wherein the output flow quantity of the hydraulic pump is calculated on the basis of the maximum torque, number of engine revolutions, and discharge pressure of the hydraulic pump at the moment.

3. A hydraulic controlling device for a work machine as set forth in Claim 1 or 2, wherein when the sum of the required flow quantity of said respective hydraulic actuators obtained on the basis of the operating status of an operating tool is smaller than the output flow quantity of said hydraulic pump, the required flow quantities to said respective hydraulic actuators are set so that they become said shared flow quantities.

Fig. 1

Fig. 2

| | |
|---|---|
| 20A | Electromagnetic proportional pressure-reducing valve for left travel |
| 20B | Electromagnetic proportional pressure-reducing valve for left travel |
| 21A | Electromagnetic proportional pressure-reducing valve for right travel |
| 21B | Electromagnetic proportional pressure-reducing valve for right travel |
| 22A | Electromagnetic proportional pressure-reducing valve for boom |
| 22B | Electromagnetic proportional pressure-reducing valve for boom |
| 23A | Electromagnetic proportional pressure-reducing valve for stick |
| 23B | Electromagnetic proportional pressure-reducing valve for stick |
| 24A | Electromagnetic proportional pressure-reducing valve for bucket |
| 24B | Electromagnetic proportional pressure-reducing valve for bucket |
| 25A | Electromagnetic proportional pressure-reducing valve for attachment |
| 25B | Electromagnetic proportional pressure-reducing valve for attachment |
| 27 | Hydraulic locking electromagnetic change valve |

Control unit 26

| | |
|---|---|
| 29 | Operation quantity detecting means for left travel |
| 30 | Operation quantity detecting means for right travel |
| 31 | Operation quantity detecting means for boom |
| 32 | Operation quantity detecting means for stick |
| 33 | Operation quantity detecting means for bucket |
| 34 | Operation quantity detecting means for attachment |
| 35 | Pressure sensor |
| 36 | Accelerator dial |

28

**Fig. 3**

8

Fig. 4

EP 1 048 853 A1

| Pump torque |
| --- |

0.1N·m/bit

| Accelerator dial |
| --- |

1rpm/bit

| Pump discharge pressure |
| --- |

1kPa/bit

$$\text{Flow quantity} = \frac{(\text{Torque}) \times (\text{Number of revolutions of engine}) \times (\text{Constant})}{\text{Discharge pressure}}$$

Maximum flow quantity

| Pump's permissible flow quantity $\beta$ |
| --- |

1cc/sec/bit

First limiter 37

Fig. 5

**Fig. 6**

EP 1 048 853 A1

## INTERNATIONAL SEARCH REPORT

| International application No. |
| --- |
| PCT/JP99/06250 |

**A. CLASSIFICATION OF SUBJECT MATTER**
Int.Cl⁷  F15B11/16

According to International Patent Classification (IPC) or to both national classification and IPC

**B. FIELDS SEARCHED**

Minimum documentation searched (classification system followed by classification symbols)
Int.Cl⁷  F15B11/16

Documentation searched other than minimum documentation to the extent that such documents are included in the fields searched
Jitsuyo Shinan Koho       1926-1996    Toroku Jitsuyo Shinan Koho  1994-2000
Kokai Jitsuyo Shinan Koho  1971-2000      Jitsuyo Shinan Toroku Koho  1996-2000

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | DE,A,3644736 (Mannesmann Rexroth GmbH) 14.07.1988 Fig2 & US, A, 4856278  15.08.1989 & JP, A, 63-176803 21.07.1988 | 1-3 |
| X | JP, A, 4-131503 (KAYABA INDUSTRY CO., LTD.), 06.05.1992 page 4, upper right column, line 11 to lower right column, line 1 (Family: none) | 1-3 |
| Y | JP, U, 5-3601 (Sumitomo Kenki K.K.), 19.01.1993 Fig. 5 (Family: none) | 1-3 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 01 February, 2000 (01.02.00) | 15 February, 2000 (15.02.00) |

| Name and mailing address of the ISA/ Japanese Patent Office | Authorized officer |
| --- | --- |
| Facsimile No. | Telephone No. |

Form PCT/ISA/210 (second sheet) (July 1992)